# EUROPÄISCHE PATENTANMELDUNG

(11) **EP 1 647 322 A2**
(43) Veröffentlichungstag der Anmeldung: **19.04.2006**
(21) Anmeldenummer: 05018002.5
(22) Anmeldetag: 18.08.2005
(51) Int. Cl.: B01D 53/18, F24F 3/16, F24F 6/16

(54) **Luftwäschegerät zur Luftreinigung und/oder Luftbefeuchtung**

(30) Priorität: 15.10.2004 DE 102004050401
(71) Anmelder: Edgar Emele Kunststofftechnik Präzisionsformen GmbH & Co. KG, 86179 Augsburg (DE)
(72) Erfinder: Buchner, Heinz, 84069 Schierling (DE); Müller, Erwin, 86399 Bobingen (DE); Emele, Edgar c/o Edgar Emele Beteiligungs GmbH, 86179 Augsburg (DE)
(74) Vertreter: Zech, Stefan Markus

(57) **Zusammenfassung**

Luftwäschegerät zur Luftreinigung und/oder zur Luftbefeuchtung, enthaltend mindestens einen Rotationskörper (2), welcher teilweise in Flüssigkeit (10) eintaucht und mindestens eine Tauscherfläche (8) aufweist, welche Verunreinigungen aus der Luft in die Flüssigkeit (10) transportiert. Die Tauscherfläche (8) ist durch einen porigen Porenkörper (12) gebildet, welcher mindestens an der die Tauscherfläche bildenden Außenseite des Porenkörpers offenporig ist.

## Beschreibung

Die Erfindung betrifft ein Luftwäschegerät zur Luftreinigung und/oder Luftbefeuchtung gemäß dem Oberbegriff von Anspruch 1.

Ein Luftwäschegerät dieser Art ist aus der deutschen Offenlegungsschrift 2205600 bekannt. Durch die zunehmende Luftverschmutzung wird die Atemluft immer schlechter. Deshalb schlägt diese bekannte Schrift ein Luftwäschegerät vor, welches eine drehbar angeordnete Tauschertrommel enthält, welche teilweise in eine Flüssigkeit eingetaucht ist und von einem Getriebemotor angetrieben wird. Ein Ventilator erzeugt einen Luftstrom, welcher die mit Durchbrüchen versehene Mantelwand der Tauschertrommel von innen nach außen durchströmt. Die feuchte Mantelwand nimmt aus dem Luftstrom Staub, Pollen und andere Verunreinigungen auf und gibt sie beim Eintauchen in die Flüssigkeit an die Flüssigkeit ab.

Die EP 0 118 811 B1 zeigt ein Luftwäschegerät, bei welchem die Tauschertrommel zum Austausch zwischen Luft und Wasser einen Plattenstapel aufweist, deren Platten mit axialem Abstand hintereinander angeordnet sind. Auf dem Außenumfang der Platte liegt eine Gummirolle an, welche drehfest mit einem Zahnrad verbunden ist. Das Zahnrad ist mit einer Getriebeschnecke in Eingriff. Die Getriebeschnecke und ein Gebläserad sind jeweils drehfest auf der Welle eines Motors angeordnet.

Die EP 1 141 583 B1 zeigt ein Luftwäschegerät, bei welchem ein Rotationskörper von einem Hebelgetriebe angetrieben wird. Der Rotationskörper hat Zähne, zwischen welche ein Antriebszahn eingreift, der an einem Hebel vorgesehen ist.

Durch die Erfindung soll die Aufgabe gelöst werden, ein Luftwäschegerät derart auszubilden, dass es sowohl in der Herstellung als auch in der Benutzung preiswert ist. Ferner soll seine Funktion zuverlässig sein.

Diese Aufgabe wird gemäß der Erfindung durch die Merkmale von Anspruch 1 gelöst.

Diese Aufgabe wird ferner gemäß der Erfindung durch die Merkmale von Anspruch 2 gelöst.

Weitere Merkmale der Erfindung sind in den Unteransprüchen enthalten.

Die Erfindung hat den Vorteil, dass das Luftwäschegerät preiswert herstellbar ist. Ferner ist es in der Benutzung preiswert, weil es wegen dem geringen Gewicht des Rotationskörpers wenig Antriebsleistung benötigt und weil es weitgehend wartungsfrei ist. Ferner ist seine Funktion zuverlässig.

Der Ausdruck "Tauscherfläche" wurde für eine Oberfläche gewählt, welche Staub, Pollen und andere Luftverunreinigungen zwischen der Luft und der Flüssigkeit "austauscht".

Die Erfindung wird im Folgenden mit Bezug auf die Zeichnungen anhand von bevorzugten Ausführungsformen als Beispiele beschrieben. In den Zeichnungen zeigt
- Figur 1: einen Vertikalschnitt durch ein Luftwäschegerät gemäß der Erfindung, wobei ein Rotationskörper im axialen Längsschnitt gezeigt ist,

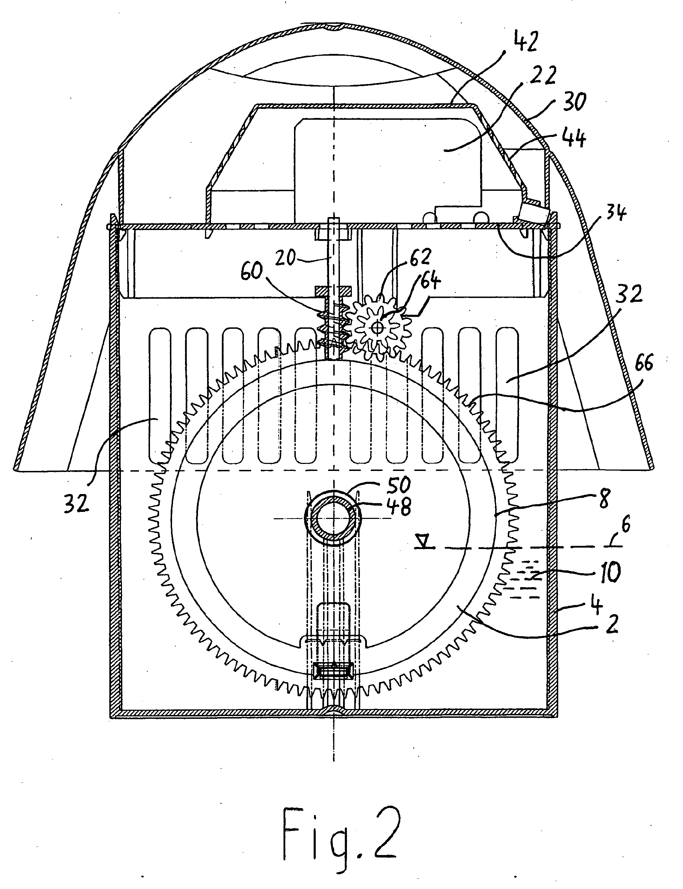

- Figur 2: einen Vertikalschnitt des Luftwäschegerätes von Figur 1 an einer um 90° gedrehten Stelle, wobei der Rotationskörper schematisch in Stirnansicht dargestellt ist,

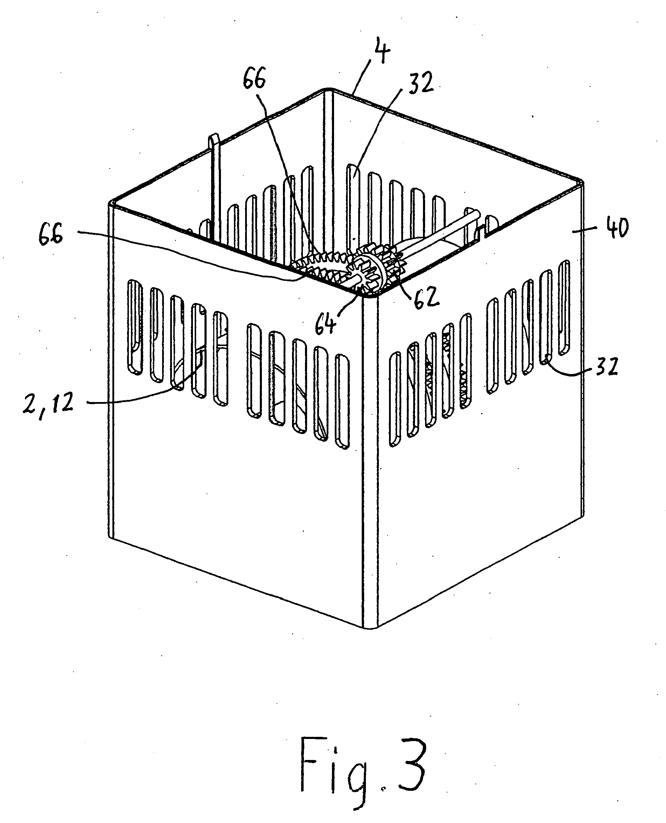

- Figur 3: eine perspektivische Darstellung eines Flüssigkeitsbehälter des Luftwäschegerätes und von Teilen eines Antriebsstranges,

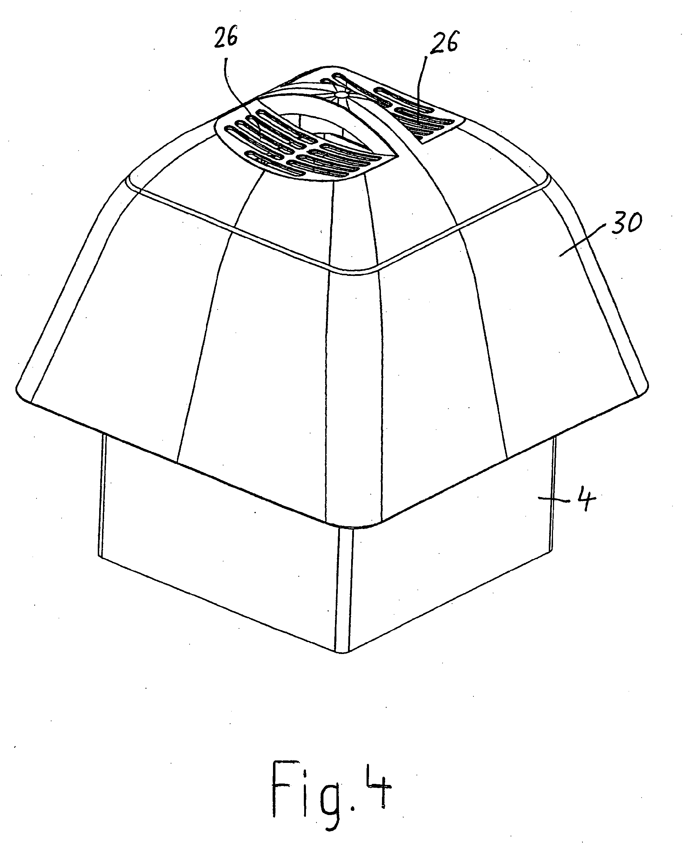

- Figur 4: eine perspektivische Außenansicht des Luftwäschegerätes.

Das Luftwäschegerät nach der Erfindung zur Luftreinigung und zur Luftbefeuchtung enthält mindestens einen (oder mehrere) Rotationskörper 2, welcher rotierbar angeordnet ist und in einem Behälter 4 teilweise unterhalb und teilweise oberhalb eines vorbestimmten Flüssigkeitsniveaus 6 positioniert ist. Der Rotationskörper 4 weist mindestens eine, gemäß den bevorzugten Ausführungsformen nach den Zeichnungen zwei Tauscherflächen 8 auf, welche durch die Flüssigkeitsoberfläche am Flüssigkeitsniveau 6 hindurchrotiert und von der Flüssigkeit 10 befeuchtet wird. Die Tauscherfläche 8 ist so beschaffen, dass sie aus der Luft Verunreinigungen, insbesondere Staub, Pollen und andere Partikel aufnimmt und in die Flüssigkeit 10 hineintransportiert und an die Flüssigkeit 10 abgibt.

Die Flüssigkeit 10 ist vorzugsweise Wasser, kann jedoch auch eine Mischung aus Wasser und einem oder mehreren Zusatzmitteln, beispielsweise Aromastoffen oder Desinfektionsmittel, sein oder eine andere Flüssigkeit, welche zur Luftreinigung geeignet ist.

Jede der beiden Tauscherflächen 8 ist durch einen Porenkörper 12 (12-1 und 12-2) gebildet, dessen Poren 14 zur Aufnahme der Verunreinigungen aus der Luft und zum Abgeben dieser Verunreinigungen an die Flüssigkeit 10 ausreichend groß sind und mindestens auf der die Tauscherfläche 8 bildenden Außenseite des Porenkörpers 12 offenporig sind. Andererseits sind die offenen Poren 14 so klein, dass eine sehr große Vielzahl von offenen Poren 14 auf der Tauscherfläche 8 nebeneinander Platz hat, sodass sie zusammen eine sehr große Oberfläche bilden, in welche Flüssigkeit beim Eintauchen in die Flüssigkeit 10 eindringen kann, und aus welcher die Flüssigkeit auch wieder herauslaufen kann.

Die Poren 14 haben beispielsweise einen Durchmesser im Bereich zwischen 1,0 Millimeter und 5,0 Millimeter, vorzugsweise im Bereich zwischen 1,5 Millimeter und 3 Millimeter.

Gemäß einer bevorzugten Ausführungsform der Erfindung sind nicht nur die an der Außenseite des Porenkörpers 12 gelegenen Poren 14 nach außen hin offen, sondern es sind auch mindestens zwei oder mehr Poren durch offenporige Formung miteinander in Flüssigkeitsverbindung.

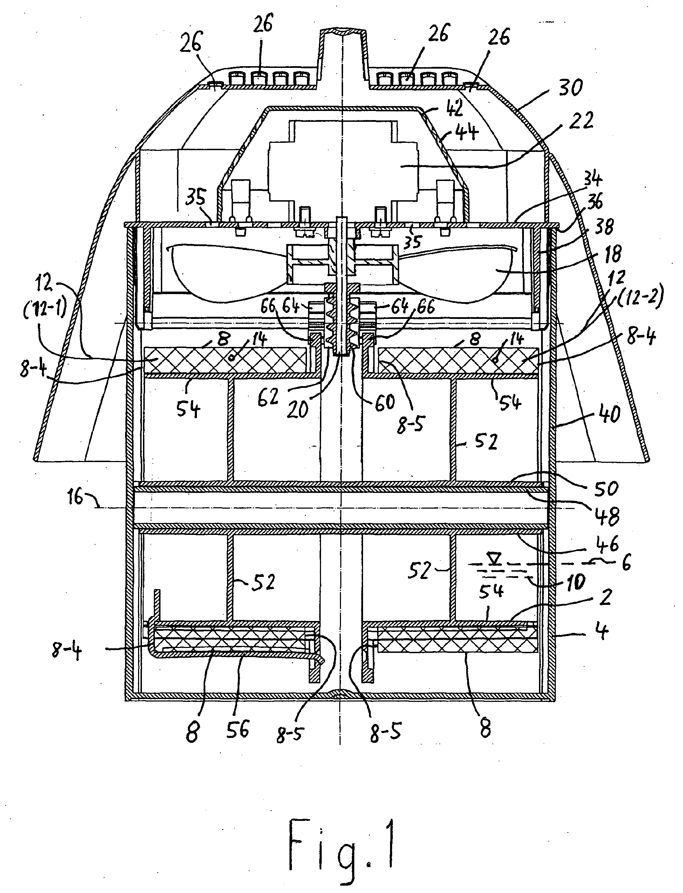

Die Doppel-Querschraffur des Porenkörpers 12 in Figur 1 repräsentiert lediglich die Tatsache, dass es eine Querschnittsdarstellung ist, nicht jedoch die Größe der Poren 14.

Die Tauscherflächen 8 der beiden Porenkörper 12 (12-1 und 12-2) bilden im Wesentlichen die gesamte äußere Mantelfläche des Rotationskörpers 2 und erstrecken sich vorzugsweise mindestens teilweise auch über einen radialen Flächenbereich des Rotationskörpers 2, welche in Figur 1 mit den Bezugszahlen 8-4 und 8-5 bezeichnet ist. Dieser stirnseitige Bereich 8-4 und 8-5 ist vorzugsweise durch die Dicke des Porenkörpers 12 gegeben.

Die Rotationsmittelachse 16 des Rotationskörpers 2 ist vorzugsweise horizontal angeordnet. Sie könnte auch schräg angeordnet sein.

Oberhalb von dem Rotationskörper 2 ist ein Gebläserad 18 auf der Motorwelle 20 eines darüber angeordneten Elektromotors 22 drehfest angeordnet. Das vom Elektromotor 22 angetriebene Gebläserad 18 erzeugt einen von oben nach unten auf die Tauscherflächen 8 des Rotationskörpers 2 gerichteten Luftstrom, welcher auf der Tauscherfläche 8 entlang strömt und von dieser abgelenkt wird.

Der Luftstromweg des von Gebläserad 18 erzeugten Luftstromes erstreckt sich von Lufteinlassöffnungen 26 in einer Haube 30 über den Elektromotor 22 hinweg auf die Oberseite des Gebläserades 18, dann von dessen Unterseite zu den Tauscherflächen 8 des Rotationskörpers 2 und von diesen seitlich weg durch Luftauslassöffnungen 32, welche in der Seitenwand des Behälters 4 oberhalb des vorbestimmten Flüssigkeitsniveaus 6 gebildet sind. Die Lufteinlassöffnungen 26 und die Luftauslassöffnungen 32 sind mit Abstand voneinander derart angeordnet, dass der vom Gebläserad 18 erzeugte Luftstrom auf der Tauscherfläche 8 der beiden Porenkörper 12 entlang strömt.

Der Elektromotor 22 ist an einer Brücke 34 befestigt, welche auf dem oberen Behälterrand 36 aufliegt und Vorsprünge 38 aufweist, welche sich nach unten in den Behälter 4 hinein erstrecken und an der Behälterseitenwand 40 anliegen können, sodass sie die Brücke 34 in Behälterquerrichtung positionieren. Die Brücke 34 hat vorzugsweise die Form einer ebenen Platte. Der Elektromotor 22 kann unterhalb der Brücke 34 oder vorzugsweise gemäß der bevorzugten Ausführungsform oberhalb der Brücke 34 angeordnet sein. In der Brücke 34 sind mehrere Durchlassöffnungen 35 im Luftstromweg des Gebläserades 18 gebildet.

Über den Elektromotor 22 kann sich eine Motorabdeckung 42 erstrecken, welche Durchlassöffnungen 44 für den vorstehend beschriebenen Luftstromweg aufweist.

Der Porenkörper 12 kann ein harter Körper sein oder vorzugsweise schwammartigfederelastisch sein. Der Porenkörper 12 ist vorzugsweise ein geschäumter Körper aus Kunststoff.

Gemäß der bevorzugten Ausführungsform weist der Rotationskörper 2 einen Trägerkörper 46 auf, welcher auf einer vorzugsweise hohlen Achse 48 drehbar gelagert ist oder selbst eine Drehachse bildet, welche in dem Behälter 4 an der Behälterwand 40 gehalten wird. Bei der bevorzugten Ausführungsform kann die Achse 48 drehbar oder undrehbar an der Behälterwand 40 gelagert sein. Der Trägerkörper 46 ist drehbar angeordnet, entweder indem er auf der Achse 48 drehbar ist oder indem sich die Achse 48 mit ihm zusammen dreht. Bei der Ausführungsform nach den Zeichnungen ist der Trägerkörper 46 in seinem Zentrum als.Hohlwelle 50 ausgebildet, welche auf der Achse 48 um die Drehachsenmittellinie 16 drehbar gelagert ist.

Um die Hohlwelle 50 erstrecken sich, durch Stege 52 mit ihr verbunden, zwei Zylindermäntel 54, welche axial und mit axialem Abstand voneinander angeordnet sind.

Auf jedem Zylindermantel 54 ist, in zueinander entgegen gesetzten Richtungen jeweils von einer äußeren Stirnseite her, einer der beiden genannten Porenkörper 12 aufgesteckt und mit dem Zylindermantel 54 drehfest verbunden. Diese drehfeste Verbindung kann entweder durch eine Klebeverbindung oder ein anderes Verbindungsmittel und/oder durch eine radiale Federspannkraft der Porenkörper 12 selbst gebildet sein.

Ferner kann jeder Porenkörper 12 an Stelle der genannten Verbindungsmittel oder zusätzlich durch eine oder mehrere Klammern 56 am Trägerkörper 46 axial in Position gehalten werden. Die Klammern 56 sind an dem Trägerkörper 46 vorzugsweise angeklipst, wozu eine mögliche Ausführungsform in Figur 1 dargestellt ist.

Auf der Motorwelle 20 ist unterhalb des Gebläserades 18 ein Schneckenrad 60 drehfest angeordnet oder durch die Motorwelle 20 selbst gebildet. Mit den Zähnen des Schneckenrades 60 ist ein erstes Zwischenzahnrad 62 in Eingriff. Axial zum ersten Zwischenzahnrad 62 ist ein zweites Zwischenzahnrad 64 axial angeordnet und mit dem ersten Zwischenzahnrad 62 drehfest verbunden. Das zweite Zwischenzahnrad 64 hat einen kleineren Durchmesser als das erste Zwischenzahnrad 62 (oder umgekehrt, abhängig von der Drehzahl des Elektromotors 22 und der gewünschten, relativ langsamen Drehzahl des Rotationskörpers 2). Die Zähne des zweiten Zwischenzahnrades 64 sind mit den Zähnen eines Zahnrades 66 in Eingriff, welches am Zylindermantel 54 axial zur Drehachsenmittellinie 16 gebildet oder als Zusatzzahnrad an diesem Zylindermantel 54 befestigt ist. Jeder Zylindermantel 54 weist ein solches Zahnrad 66 auf. Besonders preisgünstig ist es, wenn dieses Zahnrad 66 ein einstückiges Teil des Zylindermantels 54 ist.

Da bei der bevorzugten Ausführungsform der Erfindung zwei Zylindermäntel 54 vorgesehen sind, sind zwei zweite Zwischenzahnräder 64 vorgesehen, von welchen jeweils eines axial auf jeder Seite des ersten Zwischenzahnrades 62 angeordnet und mit dem ersten Zwischenzahnrad 62 drehfest verbunden ist.

Dadurch ist zwischen dem Elektromotor 22 und dem Rotationskörper 2 eine Getriebeverbindung gegeben, welche betriebssicherer ist als eine aus dem Stand der Technik bekannte, jedoch ebenfalls mögliche Reibradverbindung.

Bei der gezeigten bevorzugten Ausführungsform treibt der einzige Elektromotor 22 sowohl das Gebläserad 18 als auch den Rotationskörper 2 an. Gemäß einer anderen, jedoch teurer herstellbaren und teurer betreibbaren Ausführungsform, kann für das Gebläserad 18 ein eigener Elektromotor 22 und für den Rotationskörper 2 ein eigener Elektromotor vorgesehen sein.

Gemäß einer anderen, nicht gezeigten Ausführungsform der Erfindung besteht auch die Möglichkeit, das Luftwäschegerät ohne Gebläserad 18 auszubilden.

Eine nochmals andere Ausführungsform der Erfindung kann darin bestehen, ein Gebläserad 18 derart anzuordnen, dass es einen Luftstrom tangential oder schräg zur Tangentialrichtung der äußeren zylindrischen Tauscherfläche 8 bläst, mit solcher Stärke, dass der Luftstrom zum Antrieb des Rotationskörpers 2 ausreicht, ohne dass eine Antriebsverbindung zwischen dem Elektromotor 22 und dem Rotationskörper 2 vorgesehen ist. Für diese Ausführungsform könnte der Rotationskörper 2 auch mit Flügeln oder Stauflächen versehen werden, an welchen der vom Gebläserad 18 erzeugte Luftstrom gestaut wird und dadurch ein Drehmoment auf den Rotationskörper 2 erzeugt wird, durch welches dieser in der Flüssigkeit 10 rotiert.

Gemäß einer anderen bevorzugten, jedoch nicht dargestellten Ausführungsform der Erfindung ist an Stelle der beiden hohlzylinderförmigen Porenkörper 12-1 und 12-2 eine Vielzahl von scheibenförmigen Porenkörpern entlang der Rotationsmittelachse 16 mit Abstand voneinander in Form eines Plattenstapels angeordnet, welcher vom Elektromotor 22 um die Rotationsmittelachse 16 drehbar ist.

Die Tauscherfläche 8 kann derart ausgebildet sein, dass sie Gase aus der Luft aufnimmt, zusätzlich oder an Stelle von Partikeln wie z. B. Staub oder Pollen, und dann an die Flüssigkeit 10 im Behälter 4 abgibt.

Die Getriebeanordnung, durch welche der einzige Elektromotor 22 sowohl den Rotationskörper 2 als auch das Gebläserad 18 antreibt, kann auch für Luftwäschegeräte verwendet werden, welche anstatt eines Porenkörpers einen anderen Körper für den Transport von Verunreinigungen aus der Luft in die Flüssigkeit des Behälters aufweisen.

## Patentansprüche

1. Luftwäschegerät zur Luftreinigung und/oder zur Luftbefeuchtung, enthaltend mindestens einen Rotationskörper (2), welcher rotierbar angeordnet ist und in einem Behälter (4) teilweise unterhalb und teilweise oberhalb eines vorbestimmtem Flüssigkeitsniveaus (6) positioniert ist, wobei der Rotationskörper (4) mindestens eine Tauscherfläche (8, 8-4, 8-5)aufweist, welche durch die Flüssigkeitsoberfläche hindurchrotiert und von der Flüssigkeit befeuchtet wird, und wobei die Tauscherfläche so beschaffen ist, dass sie aus der Luft Verunreinigungen, insbesondere Staub und/oder Pollen, aufnimmt und in die Flüssigkeit hineintransportiert und an die Flüssigkeit abgibt,
**dadurch gekennzeichnet ,**
**dass** die Tauscherfläche (8) des Rotationskörpers (2) durch mindestens einen porigen Porenkörper (12) gebildet ist, dessen Poren (14) mindestens auf der die Tauscherfläche bildenden Außenseite des Porenkörpers offen sind, wobei die offenen Poren (14) der Außenseite nur so weit offen sind, dass sich eine die offenen Poren (14) überdeckende und dabei verschließende Wasserhaut bildet, wenn diese Poren aus der Flüssigkeit des Behälters (4) auftauchen, so dass die Wasserhaut Verunreinigungen aus der Luft aufnehmen und danach dann in die Flüssigkeit im Behälter (4) abgeben kann.

2. Luftwäschegerät zur Luftreinigung und/oder zur Luftbefeuchtung, enthaltend mindestens einen Rotationskörper (2), welcher rotierbar angeordnet ist und in einem Behälter (4) teilweise unterhalb und teilweise oberhalb eines vorbestimmtem Flüssigkeitsniveaus (6) positioniert ist, wobei der Rotationskörper (4) mindestens eine Tauscherfläche (8, 8-4, 8-5)aufweist, welche durch die Flüssigkeitsoberfläche hindurchrotiert und von der Flüssigkeit befeuchtet wird, und wobei die Tauscherfläche so beschaffen ist, dass sie aus der Luft Verunreinigungen, insbesondere Staub und/oder Pollen, aufnimmt und in die Flüssigkeit hineintransportiert und an die Flüssigkeit abgibt,
**dadurch gekennzeichnet ,**
**dass** die Tauscherfläche (8) des Rotationskörpers (2) durch mindestens einen porigen Porenkörper (12) gebildet ist, dessen Poren (14) mindestens auf der die Tauscherfläche bildenden Außenseite des Porenkörpers offen sind, wobei die Poren offene Poren (14) der Außenseite so groß und so weit offen sind, dass die Flüssigkeit in sie eindringen und die Poreninnenfläche befeuchten kann, wenn die offenen Poren (14) durch die Flüssigkeit im Behälter (4) hindurchtauchen, so dass der in den offenen Poren (14) nach dem Auftauchen aus der Flüssigkeit verbleibende Flüssigkeitsrest Verunreinigungen aus der Luft aufnehmen und danach dann an die Flüssigkeit im Behälter (4) abgeben kann.

3. Luftwäschegerät nach Anspruch 1 oder 2,
**dadurch gekennzeichnet,**
**dass** ein Luftstromweg (26, 18, 8, 32) gebildet ist, welcher mindestens ein Gebläserad (18) aufweist und einen Luftstrom des Gebläserades (18) über die offenporige Tauscherfläche (8) hinwegführt, wobei der Luftstrom die offenporige Tauscherfläche berührt.

4. Luftwäschegerät nach einem der vorhergehenden Ansprüche,
**dadurch gekennzeichnet,**
**dass** der mindestens eine Porenkörper (12) entweder ein harter Körper oder ein schwammartig feder-elastischer Körper ist.

5. Luftwäschegerät nach einem der vorhergehenden Ansprüche,
**dadurch gekennzeichnet,**
**dass** der mindestens eine Porenkörper (12) auf dem Außenumfang eines Trägerkörpers (46) angeordnet ist, welcher ein rotierbar angeordnetes Teil des Rotationskörpers (2) ist.

6. Luftwäschegerät nach Anspruch 4,
**dadurch gekennzeichnet,**
**dass** zwei Porenkörper (12) auf dem Trägerkörper (46) in Rotationsachsen-Längsrichtung hintereinander angeordnet sind.

7. Luftwäschegerät nach einem der vorhergehenden Ansprüche 3-5,
**dadurch gekennzeichnet,**
**dass** der Flüssigkeitsbehälter (4) Teil eines Gehäuses (4, 30) ist und dass in dem Gehäuse (4, 30) Lufteinlassöffnungen (26) am stromaufwärtigen Anfang des Luftstromweges und mit Abstand davon Luftauslassöffnungen (32) am stromabwärtigen Ende des Luftstromweges gebildet sind.

8. Luftwäschegerät nach einem der vorhergehenden Ansprüche,
**gekennzeichnet durch**
einen Elektromotor (22), welcher eine Antriebsverbindung (20, 60, 64, 66) zu dem Rotationskörper (2) aufweist.

9. Luftwäschegerät nach Anspruch 8 in Kombination mit einem der Ansprüche 3-7,
**dadurch gekennzeichnet,**
**dass** der Elektromotor (22) auch eine Antriebsverbindung (20) zu dem Gebläserad (18) aufweist.

10. Luftwäschegerät nach Anspruch 8 oder 9,
**dadurch gekennzeichnet,**
**dass** die Antriebsverbindung (20, 60, 64, 66) von dem Elektromotor (22) zu dem Rotationskörper (2) eine Getriebeverbindung ist, wobei mindestens ein Zahnrad (66) mit dem Rotationskörper drehfest verbunden ist.

11. Luftwäschegerät nach Anspruch 10,
**dadurch gekennzeichnet,**
**dass** die Getriebeverbindung ein mit einer Abtriebswelle (20) des Elektromotors (22) drehfest verbundenes Schneckenrad (60), ein mit dem Schneckenrad (60) in Zahneingriff befindliches erstes Zwischenzahnrad (62) und mindestens ein zweites Zwischenzahnrad (64) aufweist, wobei das zweite Zwischenzahnrad (64) axial zum ersten Zwischenzahnrad (62) angeordnet und mit diesem drehfest verbunden ist und die Zähne des zweiten Zwischenzahnrades (64) mit den Zähnen des Zahnrades (66) in Eingriff ist, welches mit dem Rotationskörper (2) drehfest verbunden ist.
